# EUROPEAN PATENT APPLICATION

(11) **EP 2 808 714 A1**
(43) Date of publication of application: **03.12.2014**
(21) Application number: 12866702.9
(22) Date of filing: 16.10.2012
(51) Int. Cl.: G02B 6/32, G02B 6/02, G02B 6/42

(54) **OPTICAL COUPLING MEMBER AND OPTICAL CONNECTOR**

(30) Priority: 27.01.2012 JP 2012015281
(71) Applicant: Mitsubishi Pencil Co., Ltd., Tokyo 140-8537 (JP)
(72) Inventor: MITSUI, Akihito, Yokohama-shi Kanagawa 221-8550 (JP); MORIYA, Naohiko, Yokohama-shi Kanagawa 221-8550 (JP)
(74) Representative: Vossius & Partner
(86) International application number: PCT/JP2012/076653
(87) International publication number: WO 2013/111398

(57) **Abstract**

In order to position lenses and an optical fiber highly accurately while relaxing the assembly accuracy requirements, the present invention provides an optical coupling member (10) having an optical fiber (13), a holding member (11) that has an insertion hole (11a) formed at an end thereof for holding the optical fiber (13) inserted via the insertion hole (11a), and a plurality of ball lenses (12a, 12b) housed along an optical axis in a housing part (11c) formed at an opposite end of the holding member (11). The ball lenses (12a, 12b) are arranged in contact with each other and the optical fiber (13) is arranged in contact with the ball lens (12a) that faces the optical fiber (13).

## Description

### Technical Field

The present invention relates to an optical coupling member and an optical connector using the same, the optical coupling member being for gathering light from a light-emitting element to input into an optical fiber or gathering light output from the optical fiber into a light-receiving element.

### Background Art

In optical communications, an optical connector, for example, connects an optical fiber to an optical device to transmit optical signals. In such an optical connector, if there is an axial misalignment between a lens and the optical fiber, the coupling efficiency is reduced. Therefore, in order to increase the coupling efficiency, it is necessary to position the lens and the optical fiber with high accuracy. Such highly-accurate positioning is realized by highly accurate assembly work of the optical connector.

In order to require the highly-accurate assembly work, there is need to discard products that do not meet a predetermined assembly accuracy, which causes reduction in product yield. Accordingly, in order to relax the assembly accuracy requirements, there is proposed a fiber collimator for an optical module having a lens set composed of a plurality of lenses (for example, see Patent Literature 1).

### Citation List

### Patent Literature

Patent Literature 1: Japanese Patent Application Publication No. H1-128013

### Summary of the Invention

### Technical Problem

However, in the above-mentioned fiber collimator for an optical module, even if the lens set composed of a plurality of lenses are used, a lens that is placed closest to the optical fiber is required to be positioned with high assembly accuracy, which may bring about a problem of reduction in product yield.

The present invention was carried out in view of the foregoing, and has an object to provide an optical coupling member and an optical connector using the optical coupling member, which enable highly accurate positioning between the lens and the optical fiber while relaxing the assembly accuracy requirements.

### Solution to Problem

The present invention provides an optical coupling member comprising: an optical fiber; a holding member having an insertion hole formed at an end and being configured to hold the optical fiber inserted via the insertion hole; and a plurality of ball lenses being housed along an optical axis in a housing part formed at an opposite end of the holding member, wherein the ball lenses are arranged in contact with each other and the optical fiber is arranged in contact with a ball lens that faces the optical fiber out of the ball lenses.

Furthermore, in the above-described optical coupling member, as the ball lenses are arranged in contact with each other and the optical fiber is arranged in contact with the ball lens that faces the optical fiber, it is possible to use one ball lens as a reference to position the optical fiber and the other ball lens, thereby enhancing the efficiency of the assembly work and facilitating the positioning of the ball lenses and the optical fiber. Accordingly, it is possible to position the optical fiber and the ball lenses with high accuracy while relaxing the accuracy requirements of the assembly work.

Furthermore, in the above-described optical coupling member, the ball lenses can include a first ball lens and a second ball lens, and the optical fiber, the first ball lens and the second ball lens can be arranged in sequence from the insertion hole. In this case, as each of the second ball lens and the optical fiber is arranged in contact with the first ball lens, it is possible to position the second ball lens and the optical fiber with reference to the first ball lens. It is also possible to make the configuration around the optical coupling member compact.

Furthermore, in the above-described optical coupling member, the first ball lens and the second ball lens can have a same diameter. In this case, as the first and second ball lenses of same diameter are used, it is possible to house the first and second ball lens without the need to provide a complicated structure for the holding member, thereby suppressing an increase in cost of the optical coupling member as a whole.

Furthermore, in the above-described optical coupling member, the first ball lens can have a smaller diameter than the second ball lens. In this case, it is possible to facilitate the assembly process without losing the accuracy of axis alignment and also possible to control a state of beams by the diameter of the first ball lens.

Furthermore, in the above-described optical coupling member, a refractive index matching material can be charged around the ball lenses. In this case, it is possible to adjust the refractive index from the optical fiber, via the first ball lens to the second ball lens, thereby reducing reflection in light propagation and reducing an amount of attenuation of propagating light. It is also possible to collimate outgoing light from the lens.

The present invention also provides an optical connector configured to connect the optical coupling member of any of the above-described aspects. In this case, light emitted from the optical fiber is directly inserted into the first ball lens, thereby enhancing the coupling efficiency. In the same manner, light emitted from a light-emitting element at the optical device side is inserted from the first ball lens directly to the optical fiber, thereby enhancing the coupling efficiency.

### Technical Advantage of the Invention

According to the present invention, it is possible to position the lens and the optical fiber with high accuracy while relaxing the accuracy requirements in the assembly work.

### Brief Description of Drawings

Fig. 1A is a side view of an optical coupling member according to a first embodiment, Fig. 1B is a cross sectional view of the optical coupling member according to the first embodiment, and Fig. 1C is an enlarged view of a part circled by the chain double-dashed line shown in Fig. 1B;
Fig. 2 is a cross sectional view schematically illustrating an optical connector according to the first embodiment connected to an optical device;
Fig. 3A is a side view of an optical coupling member according to a second embodiment, Fig. 3B is a cross sectional view of the optical coupling member according to the second embodiment, and Fig. 3C is an enlarged view of a part circled by the chain double-dashed line shown in Fig. 3B;
Fig. 4 is a cross sectional view schematically illustrating an optical connector according to the second embodiment connected to an optical device; and
Fig. 5 is a cross sectional view of around a housing part in an optical coupling member according to a third embodiment.

### Description of Embodiments

### (First Embodiment)

With reference to the accompanying drawings, embodiments of the present invention will be described in detail below.

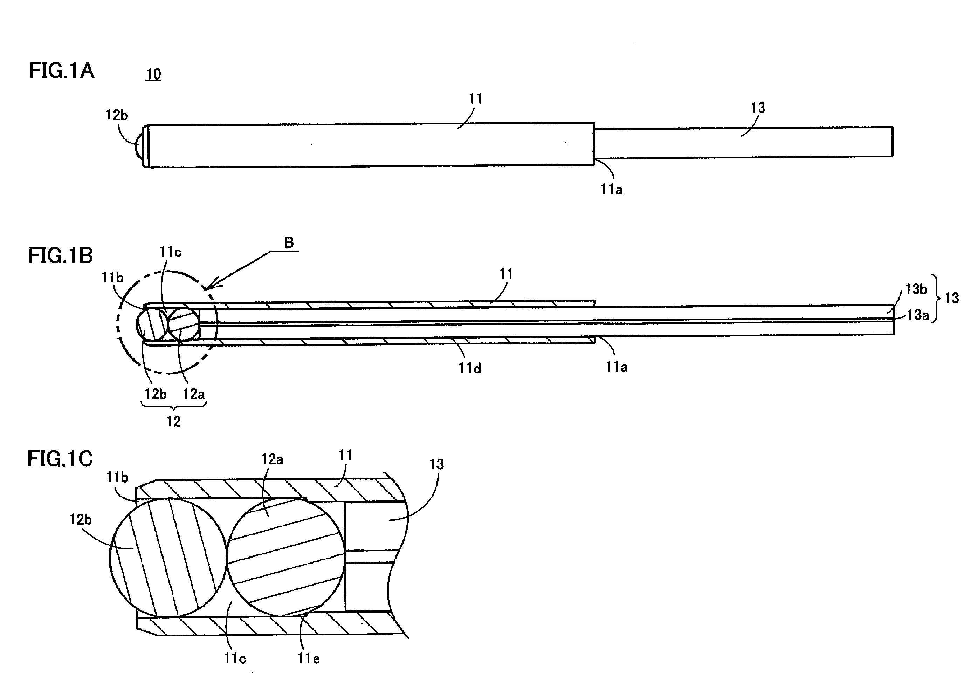

Fig. 1A is a side view of an optical coupling member 10 according to the first embodiment of the present invention and Fig. 1B is a cross sectional view of the optical coupling member 10. As illustrated in Figs. 1A and 1B, the optical coupling member 10 has a holding 11, as a holding member, approximately in a cylindrical shape, a ball lens set 12 held at an end of this holder 11, and an optical fiber 13 that is inserted via an insertion hole 11a formed at the other end of the holder 11. In the optical coupling member 10, the ball lens set 12 is composed of a ball lens 12a as a first ball lens and a ball lens 12b as a second ball lens.

The holder 11 is made, for example, by forming of a metal material, a resin material or a ceramics material. The metal material to form the holder 11 may be, for example, stainless, copper base material or the like. Besides, the resin material to form the holder 11 may be, for example, polypropylene (PP), acrylonitrile butadiene styrene copolymer (ABS), polyacetal (POM), polycarbonate (PC), polybutylene terephthalate (PBT), polyethylene terephthalate (PET), polyethylene naphthalate (PEN), polyethersulfone (PES), polyphenyleneether (PPE), polyamide imide (PAI), polyether imide (PEI) or the like. The holder 11 is formed by subjecting such a material to injection molding, extrusion molding, press molding or any other molding.

Further, the ceramic material to form the holder 11 may be, for example, zirconia, alumina, silicon nitride, silicon carbide or the like. The holder 11 is formed by subjecting such a material to injection molding, extrusion molding, press molding or any other molding. Besides, the material to form the holder 11 may be glass or crystallized glass.

As illustrated in Fig. 1B, at an end on the ball lens set 12 side of the holder 11, there is formed an opening lib. Inside this opening 11b, a housing part 11c is provided for housing the ball lens set 12. This housing part 11c is formed to have a smaller diameter than the ball lenses 12a and 12b that make up the ball lens set 12 so that the ball lenses 12a and 12b can be pressed into the housing part 11c.

Further, inside the holder 11, there is also formed a through hole 11d that has an approximately same diameter as the outer diameter of the optical fiber 13. This through hole lid is provided to be connected to the insertion hole 11a and also to the housing part 11c.

The ball lenses 12a and 12b that make up the ball lens set 12 are formed, for example, by shaping of a glass material. The ball lenses 12a and 12b according to the first embodiment are formed to have approximately identical diameters. As illustrated in Fig. 1B, the ball lenses 12a and 12b are housed inside the housing part 11c in such a state that they are in contact with each other. The ball lens 12a is arranged such that a part of the ball lens 12a is in contact with a tip end of the optical fiber 13 inserted in the through hole 11d. On the other hand, the ball lens 12b is arranged with a part exposed from the opening 11b, however, the ball lens 12b may be arranged with the part unexposed.

The optical fiber 13 may be formed of a conventionally known glass optical fiber, plastic optical fiber or H-PCF, without limitation. For example, if the optical fiber 13 is a plastic optical fiber, the optical fiber has a core 13a that is formed through its center and a cladding 13b that covers the core 13a. At an end surface of the optical fiber 13 that is in contact with the ball lens 12a, the core 13a and the cladding 13b flush with each other. That is, in the end surface of the optical fiber 13 that is in contact with the ball lens 12a, the core 13a and the cladding 13b are aligned with each other.

Further, the optical fiber 13 is inserted via the insertion hole 11a into the through hole lid and is fixed such that an tip end of the optical fiber 13 is in contact with the ball lens 12a. In this case, the optical fiber 13 is, for example, fixed to the holder 11 with use of an adhesive agent applied between the optical fiber 13 and the inner peripheral surface of the through hole 11d. Note that fixation of the optical fiber 13 to the holder 11 is not limited to this but may be performed by any other method.

Here, the method for positioning the optical fiber 13 and the ball lens set 12 in the holder 11 of the optical coupling member 10 according to the first embodiment will be explained with reference to Fig. 1C. Fig. 1C is an enlarged view of a part circled by the chain double-dashed line shown in Fig. 1B. As illustrated in Fig. 1C, in the housing part 11c, a step part 11e is formed at the boundary between a part which size is slightly smaller than the diameter of the ball lenses 12a and 12b and a part which diameter is approximately identical to the outer diameter of the optical fiber 13. As the outer diameter of the optical fiber 13 is formed smaller than the diameter of the ball lenses 12a and 12b, the ball lens 12a that is pressed in the opening 11b is stopped by being partially in contact with the step part 11e and is positioned at a predetermined position.

The ball lens 12b pressed in the opening 11b is stopped by being partially in contact with the ball lens 12a and is positioned at a predetermined position. Besides, the optical fiber 13 that is inserted via the insertion hole 11a is stopped with a tip end in contact with the ball lens 12a and is positioned at the predetermined position. In this way, the ball lens set 12 and the optical fiber 13 are positioned at the respective predetermined positions in the holder 11 in such a state that the ball lens 12a, the ball lens 12b and the optical fiber 13 are in contact with each other.

Next description is made about an assembly process of the optical coupling member 10 according to the first embodiment. The assembly process of the optical coupling member 10 includes a step (a) of pressing the ball lens 12a into the holder 11, a step (b) of pressing the ball lens 12b into the holder 11, and a step (c) of inserting the optical fiber 13. Each of these steps will be described in detail below.

### <Step (a)>

First, the ball lens 12a is pressed via the opening 11b into the housing part 11c of the holder 11. The pressed-in ball lens 12a is stopped when a part of the ball lens 12a comes into contact with the step part 11e. When the ball lens 12a is in contact with the step part 11e, the pressing-in work is completed. In this optical coupling member 10, the ball lens 12a used is a lens with no orientation and therefore, there is no need to adjust the orientation in pressing into the holder 11 and the assembly work is made easy.

Further, a part of the ball lens 12a is in contact with the inner wall that defines the housing part 11c in the holder 11. As the housing part 11c is formed slightly smaller than the diameter of the ball lenses 12a and 12b that make up the ball lens set 12, the ball lens 12a is fixed by exertion of pressure by the inner wall that defines the housing part 11c. In this way, the ball lens 12a is positioned at the predetermined position and fixed.

### <Step (b)>

Next, the ball lens 12b is inserted via the opening 11b of the holder 11 into the housing part 11c. The pressed-in ball lens 12b is stopped when an end thereof comes into contact with the ball lens 12a. Once the ball lens 12b is in contact with the ball lens 12a, the pressing-in work is completed. In the optical coupling member 10, the ball lens 12b used is a lens with no orientation and therefore, there is no need to adjust the orientation in pressing into the holder 11 and the assembly work is made easy. Besides, as it is pressed into the housing part 11c of the holder 11, the center axis of the ball lens 12b comes into conformity with the center axis of the ball lens 12a.

Further, a part of the ball lens 12b is in contact with the inner wall that defines the housing part 11c in the holder 11. As the housing part 11c is formed slightly smaller than the diameter of the ball lenses 12a and 12b that make up the ball lens set 12, the ball lens 12b is fixed by exertion of pressure by the inner wall that defines the housing part 11c. In this way, the ball lens 12b is fixed at the predetermined position and fixed.

### <Step (c)>

Then, the optical fiber 13 is inserted via the insertion hole 11a of the holder 11, into the through hole 11d. The optical fiber 13 is guided by the inner wall that defines the through hole 11d and reaches the ball lens 12a. When the optical fiber 13 comes into contact with the ball lens 12a, the insertion work is completed. Then, the optical fiber 13 is positioned at the predetermined position. Further, when the optical fiber 13 is inserted into the through hole 11d of the holder 11, the center axis of the optical fiber 13 is in conformity with the center axis of each of the ball lenses 12a and 12b. Thus, the optical fiber 13 and the ball lens set 12 can be axis-aligned easily.

Note that the ball lens 12a is fixed by pressure by the holder 11 and it is further sandwiched between the step part 11e and the fixed ball lens 12b. Therefore, the ball lens 12a is not displaced even when the optical fiber 13 is pushed to the ball lens 12a.

Through these steps (a) to (c), the optical coupling member 10 illustrated in Fig. 1 can be assembled.

As described up to this point, since the optical coupling member 10 according to the present embodiment is configured to have the ball lens 12a, the ball lens 12b and the optical fiber 13 in contact with each other, it is possible to position the ball lens 12b and the optical fiber 13 with reference to the ball lens 12a, thereby making it possible to improve the working efficiency and facilitate positioning of the ball lens set 12 and the optical fiber 13. Accordingly, it is possible to position the optical fiber 13 and the ball lens set 12 with high accuracy while relaxing the accuracy requirements of the assembly work.

Besides, as the ball lens 12b and the optical fiber 13 are configured to be in contact with the ball lens 12a, the structure around the lenses of the optical coupling member 10 is allowed to be compact. In such a case, the ball lens 12a serves as a spacer for positioning the ball lens 12a and the optical fiber 13. Besides, since two ball lenses of approximately same diameter are used as the ball lenses 12a and 12b that make up the ball lens set 12, it is possible to eliminate the necessity to provide any complicated structure in the holder 11 and suppress increase of the cost of the optical coupling member 10 as a whole.

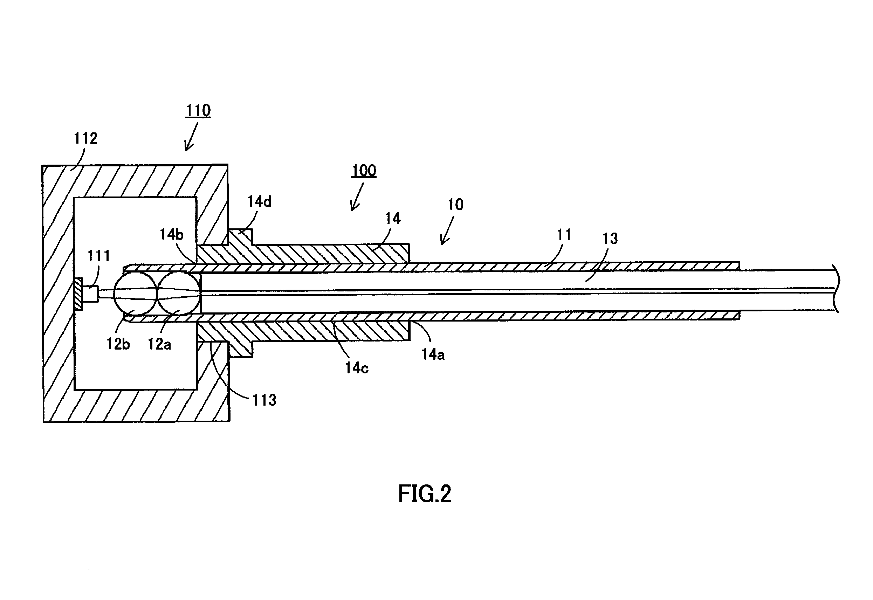

Next description is made about an optical connector 100 connected to an optical device 110, and the optical coupling member 10 according to the present embodiment is applied to the optical connector 100. Fig. 2 is a cross sectional view schematically illustrating a state of the optical connector 100 according to the present embodiment which is connected to the optical device 110. Note that Fig. 2 is used to describe the optical device 110 equipped with a light-receiving and light-emitting element for convenience of explanation, however, the structure of the optical device 110 is not limited to this and may be modified appropriately.

As illustrated in Fig. 2, the optical connector 100 according to the present embodiment is configured to have a resin joint 14 mounted on the optical coupling member 10. The optical device 110 is configured such that the light-receiving/light-emitting element is arranged inside a case 112. Further, in a side surface of the case 112 in the optical device 110, an opening 113 is provided for inserting the optical connector 100.

The resin joint 14 takes an approximately cylindrical shape and has an insertion hole 14a formed at an end for inserting the holder 11 and also has an opening 14b formed at the other end for making the holder 11 jut therefrom. A through hole 14c linking from the insertion hole 14a to the opening 14b is provided to have an approximately same diameter as the outer diameter of the holder 11. Further, in an outer peripheral surface around the opening 14b, an annular collar portion 14d is formed

In the optical connector 100, the holder 11 is inserted via the insertion hole 14a of the resin joint 14 into the through hole 14c and is fixed with its tip end jutting from the opening 14b. Fixation of the holder 11 is performed, for example, by a plurality of fixing parts provided on the same circumference near the collar portion 14d of the resin joint 14. These fixing parts are formed by first, inserting the holder 11 into the resin joint 14 to position the holder 11 at the predetermined position of the resin joint 14 and then, pressing the resin joint 14 inwardly from the outside with use of a tool.

The outer diameter of the collar portion 14d is formed to be larger than the inner diameter of an opening 113 in the optical device 110 to which the optical connector 100 is connected. Accordingly, when inserting the optical connector 100 into the optical device 110, the optical connector 100 is always inserted until the collar portion 14d abuts to the optical device 110 so that the optical connector 100 can be positioned at the predetermined position inside the case 112.

In the optical device 110, light emitting from the light-receiving/light-emitting element 111 passes in the ball lens 12b and is gathered at the end part of the fiber 13. The thus inserted light propagates in the optical fiber 13.

Besides, in the optical device 110, light emitted from the optical fiber 13 passes in the ball lens 12a and then goes into the ball lens 12b. Outgoing beams from the ball lens 12b are gathered on the light-receiving/light-emitting element 111 placed at the light-gathering position by the ball lens 12b.

In this way, the optical device 110 is configured such that when the optical connector 100 is inserted at the predetermined position in the case 112, light propagating between the light-receiving/light-emitting element 111 and the optical fiber 13 can be input or output via the ball lens set 12 appropriately.

As described up to this point, according to the optical connector 100 of this embodiment, it is possible to relax the assembly accuracy requirements for axis alignment.

### (Second Embodiment)

Here, description is made about an optical coupling member 20 of a different structure from the optical coupling member 10 according to the first embodiment. The optical coupling member 20 is different from the optical coupling member 10 according to the first embodiment in use of two ball lenses of different diameters, that is, a ball lens 22a as a first ball lens and a ball lens 22b as a second ball lens that make up a ball lens set 22, and the structure of a holder 21 where the ball lens set 22 is housed.

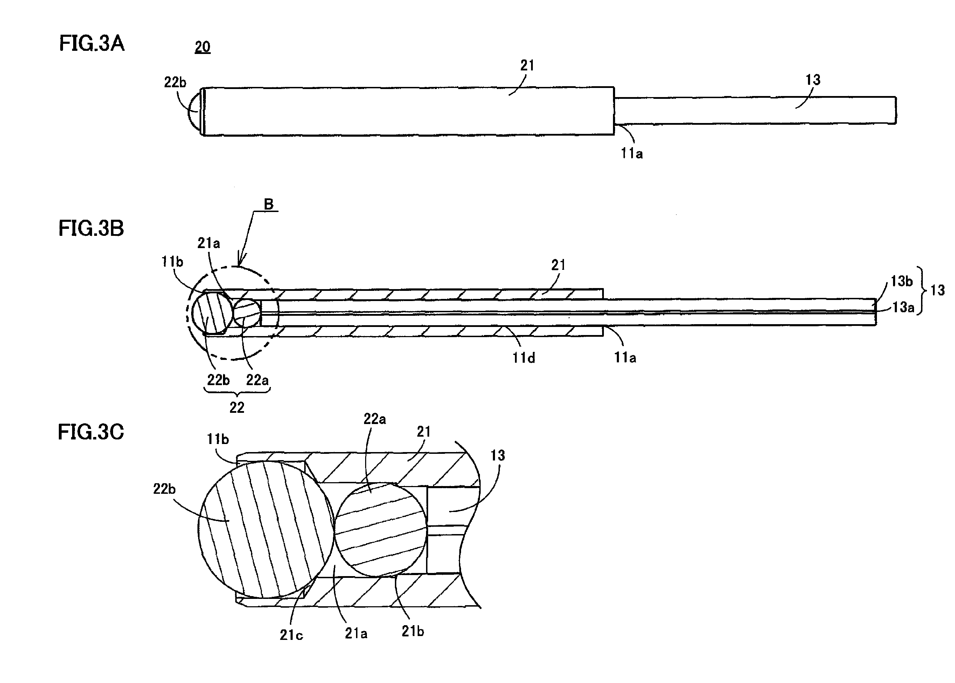

The optical coupling member 20 according to the second embodiment 20 is described with reference to Figs. 3A to 3C, below. Fig. 3A is a side view of the optical coupling member 20 according to the second embodiment of the present invention, Fig. 3B is a cross sectional view of the optical coupling member 20 and Fig. 3C is an enlarged view of a part circled by the chain double-dashed line shown in Fig. 3B. Here, in the second embodiment, same parts as those of the optical coupling member 10 according to the first embodiment are denoted by like reference numerals and their explanation is omitted here.

The ball lenses 22a and 22b that make up the ball lens set 22 are made, for example, by forming of a glass material. As illustrated in Figs. 3B and 3C, the ball lenses 22a and 22b are formed such that the diameter of the ball lens 22a is smaller than the diameter of the ball lens 22b. The diameter of the ball lens 22a may be determined appropriately in accordance with the setting distances from the ball lens 22b and the end surface of the optical fiber 13.

The holder 21 is different from the holder 11 according to the first embodiment in that the holder 21 has a housing part 21a for housing the ball lenses 22a and 22b. This housing par 21a has a small-diameter part which size is slightly smaller than the diameter of the ball lens 22a and also has a small-diameter part which size is slightly smaller than the diameter of the ball lens 22b. At the boundary position between the small-diameter part which size is slightly smaller than the diameter of the ball lens 22a and a part which size is approximately same as the outer diameter of the optical fiber 13, there is formed a step part 21b. At the boundary position between the small-diameter part which size is slightly smaller than the diameter of the ball lens 22b and the small-diameter part which size is slightly smaller than the diameter of the ball lens 22a, there is formed a step part 21c.

As described later, the ball lens 22a pressed in the opening 11b is stopped by partially coming into contact with the step part 21b and is positioned at the predetermined position. Further, the ball lens 22b pressed in the opening 11b is positioned at the predetermined position by partially coming into contact with the ball lens 22a.

The optical fiber 13 inserted via the insertion hole 11a is stopped when its tip end comes into contact with the ball lens 22a and is positioned at the predetermined position. In this way, the ball lens set 22 and the optical fiber 13 are positioned at the respective predetermined positions in a state where the ball lens 22a, the ball lens 22b and the optical fiber 13 are in contact with each other.

Next description is made about the assembly process of the optical coupling member 20 according to the second embodiment. The assembly process of the optical coupling member 20 includes a step (d) of pressing the ball lens 22a into the holder 21, a step (e) of pressing the ball lens 22b into the holder 21 and a step (f) of inserting the optical fiber 13. Each of these steps is described in detail below.

### <Step (d)>

First, the ball lens 22a is pressed into the housing part 21a via the opening 11b of the holder 21. The pressed-in ball lens 22a is stopped when it partially gets in contact with the step part 21b. Once the ball lens 22a is in contact with the step 21b, the pressing work is completed. In the optical coupling member 20, as the ball lens 22a used is a ball lens with no orientation as a lens, there is no need to adjust the orientation of the lens when pressing into the holder 21, thereby facilitating the assembly work.

A part of the ball lens 22a is in contact with the inner wall that defines the housing part 21a in the holder 21. In the housing part 21a, a part positioned between the step part 21b and the step part 21c is formed to have a diameter slightly smaller than the diameter of the ball lens 22a. Therefore, the ball lens 22a is fixed by a pressure that is exerted by the inner wall defining the housing part 21a. In this way, the ball lens 22a is positioned at the predetermined position and fixed.

### <Step (e)>

Next, the ball lens 22b is pressed into the housing part 21a via the opening lib of the holder 21. The pressed-in ball lens 22b is stopped when it partially gets in contact with the ball lens 22a. Once the ball lens 22b is in contact with the ball lens 22a, the pressing work is completed. In the optical coupling member 20, as the ball lens 22b used is a ball lens with no orientation, there is no need to adjust the orientation in pressing into the holder 21, thereby facilitating the assembly work. Further, as it is pressed into the housing part 21a of the holder 21, the center axis of the ball lens 22b comes into conformity with the center axis of the ball lens 22a.

Further, a part of the ball lens 22b is in contact with the inner wall that defines the housing part 21a in the holder 21. In the housing part 21a, a part positioned between the step 21c and the opening 11b is formed to have a diameter slightly smaller than the diameter of the ball lens 22b, and therefore, the ball lens 22b is fixed by a pressure that is exerted by the inner wall defining the housing part 21a. In this way, the ball lens 22b is positioned at the predetermined position and fixed.

### <Step (f)>

Then, the optical fiber 13 is inserted into the through hole lid via the insertion hole 11a of the holder 21. The optical fiber 13 is guided by the inner wall defining the through hole 11d and reaches the ball lens 22a. Once the optical fiber 13 abuts to the ball lens 22a, the insertion work is completed. At this time, the optical fiber 13 comes into a state that it is positioned at the predetermined position. Besides, as the optical fiber 13 is inserted into the through hole 11d of the holder 21, the center axis of the optical fiber 13 comes into conformity with the center axis of each of the ball lenses 22a and 22b that form the ball lens set 22. In this way, it is possible to perform axis alignment for the optical fiber 13 and the ball lens set 22 easily.

Note that as the ball lens 22a is fixed by pressure by the holder 21 and also is sandwiched between the step part 21b and the fixed ball lens 22b, it never goes out of alignment even when the optical fiber 13 is pressed against the ball lens 22a.

As described up to this point, according to the optical coupling member 20 of the present embodiment, the ball lens 22a, the ball lens 22b and the optical fiber 13 are brought into contact with each other. With this structure, it is possible to position the ball lens 22b and the optical fiber 13 with reference to the ball lens 22a, thereby improving the working efficiency and facilitating positioning between the ball lens set 22 and the optical fiber 13. Accordingly, it is possible to position the optical fiber 13 and the ball lens set 22 with high accuracy while relaxing the assembly accuracy requirements.

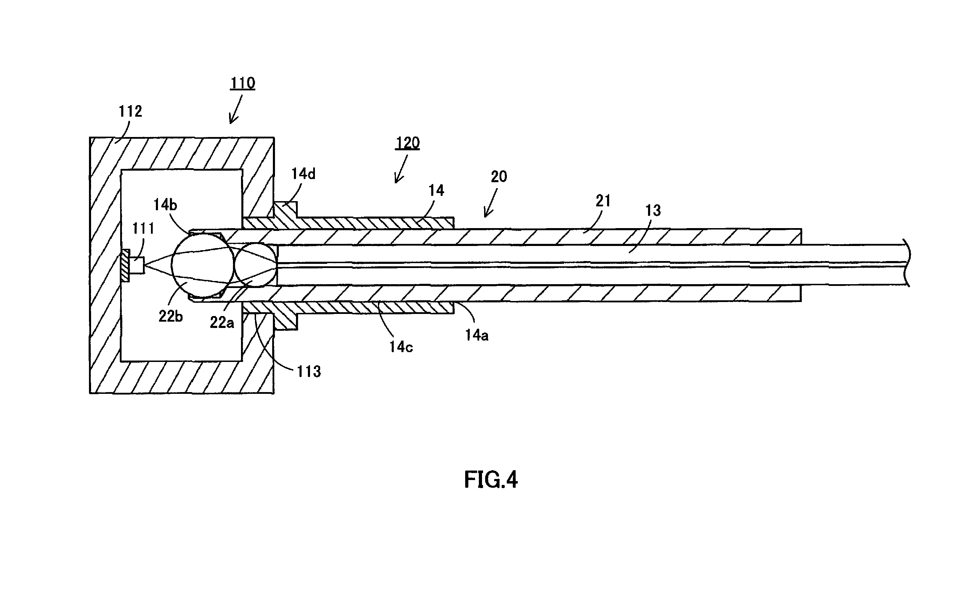

Next description is made about an optical connector 120 that is connected to an optical device 110, the optical coupling member 20 of the present embodiment being applied to the optical connector 120. Fig. 4 is a cross sectional view schematically illustrating a state of the optical connector 120 according to the present embodiment being connected to the optical device 110. As illustrated in Fig. 4, the optical connector 120 according to the present embodiment is configured with a resin joint 14 mounted on the optical coupling member 20. Note, in Fig. 4, explanation is made about the optical device 110 provided with a light-receiving/light-emitting element, for convenience of explanation, however, the optical device 110 is not limited to this structure and may be modified appropriately.

In the optical device 110, light emitted from the light-receiving/light-emitting element 111 goes inside the ball lens 22b and is gathered at the end of the optical fiber 13. Then, the thus inserted light propagates in the optical fiber 13.

Besides, in the optical device 110, light emitted from the optical fiber 13 goes inside the ball lens 22a and then propagates in the ball lens 22b. The outgoing beam from the ball lens 22b is gathered on the light-receiving/light-emitting element 111 placed at the position where light is gathered by the ball lens 22b.

Note, when the optical connector 100 according to the first embodiment is compared with the optical connector 120 according to the present embodiment, the optical connector 120 is preferably formed such that the diameter of the ball lens in contact with the optical fiber 13 is smaller. Therefore, it is possible to control the state of a beam by the diameter of the ball lens 22a that is in contact with the optical fiber 13.

Thus, the optical device 110 is configured such that, when the optical connector 120 is inserted up to the predetermined position inside the case 112, light propagating between the light-receiving/light-emitting element 111 and the optical fiber 13 can be input or output appropriately via the ball lens set 22.

As described up to this point, according to the optical connector 120 of the present embodiment, it is possible to relax the assembly accuracy requirements for axis alignment.

### (Third Embodiment)

Next description is made about an optical coupling member 30 that has a different structure from the optical coupling member 20 illustrated in the second embodiment. The optical coupling member 30 is different from the optical coupling member 20 in that a refractive index matching material 23 is added around the ball lens set 22 in the housing part 21a.

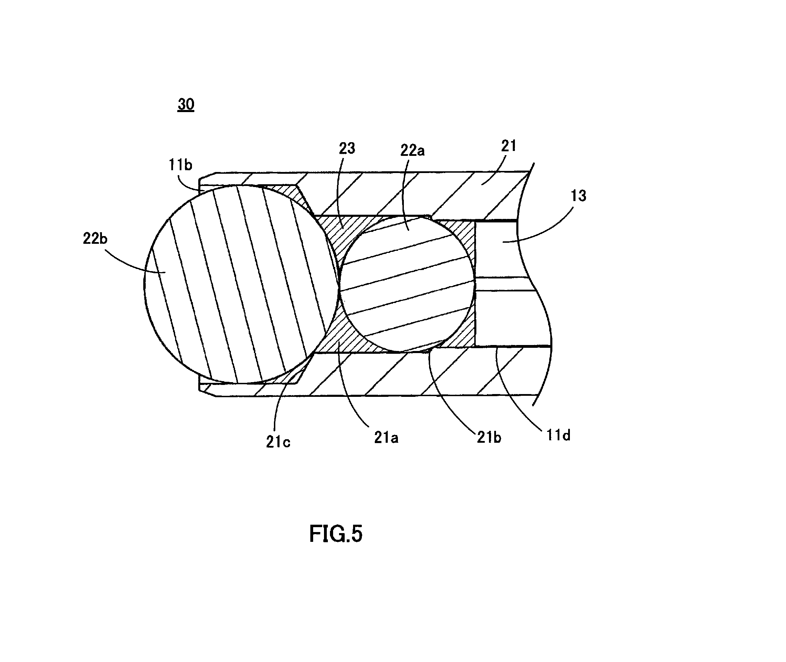

In the following, the optical coupling member 30 according to the third embodiment is described with reference to Fig. 5. Fig. 5 is a cross sectional view of around the housing part 21a in the optical coupling member 30. Note that, in the third embodiment, like parts to those of the optical coupling member 20 according to the second embodiment are denoted by same reference numerals and their explanation is omitted here.

As illustrated in Fig. 5, in the housing part 21a, the refractive index matching material 23 is charged around a contact point between the ball lens 22b and the ball lens 22a and around a contact surface between the ball lens 22a and the optical fiber 13. The refractive index matching material 23 is made of, for example, a well-known material that is a silicone base material mixed with glass filler.

The refractive index matching material 23 can be charged into the housing part 21a, for example, by pressing the ball lens 22b partially coated with the refractive index matching material 23 into the housing part 21a and also inserting the optical fiber 13 with the tip end coated with the refractive index matching material 23 into the through hole 11d.

In the optical coupling member 30 according to the present embodiment, the refractive index matching material 23 is charged around the contact point between the ball lens 22b and the ball lens 22a and around the contact surface between the ball lens 22a and the optical fiber 13. With this structure, it is possible to adjust the refractive index from the optical fiber 13 via the ball lens 22 up to the ball lens 22b and also to reduce reflection during propagation, thereby reducing an amount of attenuation of propagating light. It is also possible to collimate outgoing light from the ball lens 22b.

Note that the present invention is not limited to the above-described embodiments and may be modified in various forms. In the above-described embodiments, the size and shape illustrated in the accompanying drawings are not intended for limiting the present invention and may be modified as far as the effects of the present invention can be exerted. Other modifications may be also made appropriately without departing from the scope of the purpose of the present invention.

For example, in the above-mentioned first to third embodiment, it is assumed that each of the holders 11 and 21 has an approximately cylindrical form. However, the structure of the holders 11 and 21 is not limited to this and may be modified appropriately. The holders 11 and 21 may take any form as far as housing parts 11c and 21a for housing the ball lens sets 12, 22 are formed at an end and the insertion hole 11a for the optical fiber 13 is formed at the opposite end. For example, each holder may take a square tube form (that is, such a tube form that a cross section orthogonal to the insertion direction of the optical fiber 13 is a square).

Further, in the above-mentioned first to third embodiment, it is assumed that the ball lens set 22 is made up of two ball lenses. However, the configuration of the ball lens set is not limited to this and may be modified appropriately. For example, the ball lens set may be made of three or more ball lenses.

Furthermore, in the above-mentioned first embodiment, the assembly process of the optical coupling member 10 is explained in the order of the steps (a) to (c). However, the assembly process is not limited to this and may be modified appropriately. For example, the optical coupling member 10 may be assembled in the order of the steps (a), (c) and (b). In the like manner, in the second embodiment, the assembly process of the optical coupling member 20 is explained in the order to the steps (d) to (f), but the optical coupling member 20 may be assembled in the order of the steps (d), (f) and (e).

Furthermore, in the above-mentioned third embodiment, the refractive index matching material 23 is charged around the ball lens set 22 in the housing part 21a of the optical coupling member 20 according to the second embodiment. However, the structure of the optical coupling member 30 is not limited to this and may be modified appropriately. For example, the optical coupling member 30 may be configured such that the refractive index matching material 23 is charged around the ball lens set 12 in the housing part 11c of the optical coupling member 10 according to the first embodiment.

The disclosure of Japanese Patent Application No. 2012-015281, filed on January 27, 2012, including the specification, drawings, and abstract, is incorporated herein by reference in its entirety.

## Claims

1. An optical coupling member comprising:
an optical fiber;
a holding member having an insertion hole formed at an end and being configured to hold the optical fiber inserted via the insertion hole; and
a plurality of ball lenses being housed along an optical axis in a housing part formed at an opposite end of the holding member,
wherein the ball lenses are arranged in contact with each other and the optical fiber is arranged in contact with a ball lens that faces the optical fiber out of the ball lenses.

2. The optical coupling member according to claim 1, wherein the ball lenses include a first ball lens and a second ball lens, and the optical fiber, the first ball lens and the second ball lens are arranged in sequence from the insertion hole.

3. The optical coupling member according to claim 2, wherein the first ball lens and the second ball lens have a same diameter.

4. The optical coupling member according to claim 2, wherein the first ball lens has a diameter that is smaller than a diameter of the second ball lens.

5. The optical coupling member according to claim 1, wherein a refractive index matching material is charged around the ball lenses.

6. An optical connector configured to connect the optical coupling member of claim 1.

## Amended claims

### Amended claims under Art. 19.1 PCT

**1.** An optical coupling member comprising:
an optical fiber;
a holding member having an insertion hole formed at an end and being configured to hold the optical fiber inserted via the insertion hole; and
a plurality of ball lenses being housed along an optical axis in a housing part formed at an opposite end of the holding member, the plurality of ball lenses being pressed into the housing part,
wherein the ball lenses are arranged in contact with each other and the optical fiber is arranged in contact with a ball lens that faces the optical fiber out of the ball lenses.

**2.** The optical coupling member according to claim 1, wherein the ball lenses include a first ball lens and a second ball lens, and the optical fiber, the first ball lens and the second ball lens are arranged in sequence from the insertion hole.

**3.** The optical coupling member according to claim 2, wherein the first ball lens and the second ball lens have a same diameter.

**4.** The optical coupling member according to claim 2, wherein the first ball lens has a diameter that is smaller than a diameter of the second ball lens.

**5.** The optical coupling member according to claim 1, wherein a refractive index matching material is charged around the ball lenses.

**6.** An optical connector configured to connect the optical coupling member of claim 1.
